(19) Europäisches Patentamt
European Patent Office
Office européen des brevets

(11) Veröffentlichungsnummer: **0 158 918**
**A1**

(12)
# EUROPÄISCHE PATENTANMELDUNG

(21) Anmeldenummer: **85103940.4**

(22) Anmeldetag: **01.04.85**

(51) Int. Cl.⁴: **C 08 G 65/44**

(30) Priorität: **14.04.84 DE 3414240**

(43) Veröffentlichungstag der Anmeldung:
**23.10.85 Patentblatt 85/43**

(84) Benannte Vertragsstaaten:
**BE DE FR GB IT NL**

(71) Anmelder: **BASF Aktiengesellschaft**
**Carl-Bosch-Strasse 38**
**D-6700 Ludwigshafen(DE)**

(72) Erfinder: **Muench, Volker, Dr.**
**Luitpoldstrasse 114**
**D-6700 Ludwigshafen(DE)**

(72) Erfinder: **Hambrecht, Juergen, Dr.**
**Werderstrasse 30**
**D-6900 Heidelberg(DE)**

(72) Erfinder: **Himmele, Walter, Dr.**
**Eichenweg 14**
**D-6909 Walldorf(DE)**

(72) Erfinder: **Echte, Adolf, Dr.**
**Leuschnerstrasse 42**
**D-6700 Ludwigshafen(DE)**

(72) Erfinder: **Swoboda, Johann, Dr.**
**Neuwiesenstrasse 28**
**D-6700 Ludwigshafen(DE)**

(54) **Verfahren zur Herstellung von Polyphenylenethern.**

(57) Die Erfindung betrifft ein Verfahren zur Herstellung hochmolekularer Polyphenylenether aus einwertigen Phenolen, durch oxidative Kupplungsreaktion mit Sauerstoff in Anwesenheit eines Katalysatorkomplexes aus einem Kupfersalz und einen organischen Amin der allgemeinen Formel:

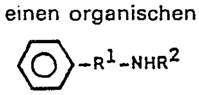

wobei $R^1$ eine verzweigte oder nichtverzweigte Alkyliden- oder Alkenylidenkette mit 2 bis 20 C-Atomen darstellt, der Substituent $R^2$ ein Wasserstoffatom oder $C_1$- bis $C_{12}$-Alkyl- oder $C_5$- bis $C_8$-Cycloalkylgruppen, die gegebenenfalls funktionelle Gruppen wie $OR^3$, $NHR^3$, $SR^3$ tragen können, in denen $R^3$ wiederum ein Wasserstoffatom der $C_1$- bis $C_{12}$-Alkyl- oder $C_5$- bis $C_8$-Cycloalkylgruppen sein kann, umfaßt in Gegenwart eines aromatischen Kohlenwasserstoffs als Lösungsmittel.

Bevorzugte Amine sind 2-Methyl-3-phenyl-propylamin, N-Methyl-N-(1-ethyl-3-phenylpropyl)-amin, 1-Ethyl-3-methyl-3-phenylpropylamin, N-(2-Methyl-3-phenylpropyl)-N-(3-tert.-butyloxypropyl)amin oder N-2-(Methyl-3-phenylpropyl)-N-(3,5,5-trimethylhexyl)amin.

EP 0 158 918 A1

Croydon Printing Company Ltd

Verfahren zur Herstellung von Polyphenylenethern

Die Erfindung betrifft ein Verfahren zur Herstellung hochmolekularer Polyphenylenether aus einwertigen Phenolen, die in denbeiden ortho-Stellungen oder zusätzlich in einer meta-Position, nicht aber in para-Stellung Alkylsubstituenten aufweisen durch oxidative Kupplungsreaktion mit Sauerstoff bei Temperaturen zwischen 10 und 50°C in Anwesenheit eines Katalysatorkomplexes aus einem Kupfersalz und einem organischen Amin in Gegenwart eines aromatischen $C_6$- bis $C_{10}$-Kohlenwasserstoffs als Lösungsmittel im Bereich von 1 : 1 bis 20 : 1 Gewichtsteilen, bezogen auf das monomere Phenol und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Polyphenylenether und Verfahren zu ihrer Herstellung sind an sich bekannt und in zahlreichen Veröffentlichungen z.B. in den US-Patentschriften 3 306 874, 3 306 875m 3 365 422, 3 639 656, 3 642 699, 3 722 299, 3 838 102, 3 661 848 und in den DE-Offenlegungsschriften 2 505 328, 2 738 889, 3 033 813, 3 214 425 und 3 314 711 beschrieben. Alle diese bisher beschriebenen Reaktionswege weisen jedoch den Nachteil auf, daß bei der oxidativen Polykondensation bei der Herstellung höhermolekularer Polykondensate zu lange Reaktionszeiten erforderlich sind und die Ausbeute an Polyphenylenether zugunsten der Diphenochinonbildung, die eine bekannte Konkurrenzreaktion darstellt, verschoben ist und deshalb zumeist unter 99 Gew.-%, bezogen auf das eingesetzte Phenol, liegt.

Zum Stand der Technik ist noch anzumerken, daß bereits in den Literaturstellen US-PS 3 306 874 (1), DE-OS 2 505 328 (2), DE-OS 2 738 889 (3), DE-OS 3 314 711 (4) der Einsatz spezieller Amine und spezieller Gemische von Aminen beschrieben wird. Ferner wird in den Literaturstellen "Makromolekulare Chemie" Band 178, Seite 401, (1977) und "Makromolekulare Chemie" Band 178, Seite 1341, (1977) der Einsatz monomerer und polymerer Phenylgruppen tragender Amine, wie beispielsweise

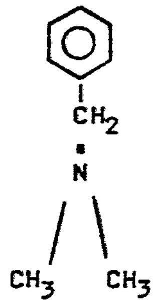 und 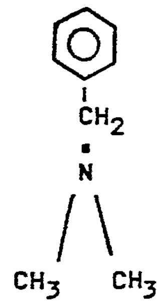

beschrieben. Während die in (1), (2), (3) und (4) beschriebenen Amine und Amingemische in der Hauptsache Polyphenylenether und in untergeordnetem, allerdings nicht tolerierbaren Maße Diphenochinon liefern, liefern die in (5) und (6) aufgeführten Amine vor allem Diphenochinon.

Nebenprodukte wie Diphenochinon sind nun insbesondere bei Aufarbeitungsverfahren nach dem Totalisolationsverfahren, wie z.B. bei der Mehrstufenverdampfung (vgl. EP-A1-71093) von wesentlichem Nachteil.

Der Erfindung lag deshalb die Aufgabe zugrunde, ein Katalysatorsystem zu finden, das bei kurzen Reaktionszeiten Polymere mit vergleichsweise hohen Intrinsic-Viskositäten bei gleichzeitig hoher Ausbeute und geringem Diphenochinongehalt liefert.

Diese Aufgabe wird erfindungsgemäß dadurch gelöst, daß als Aminkomponente im Katalysatorkomplex Amine der allgemeinen Formel (I)

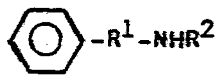

eingesetzt werden, wobei $R^1$ eine verzweigte oder nichtverzweigte Alkyliden- oder Alkenylidenkette mit 2 bis 20 C-Atomen darstellt und der Substituent $R^2$ ein Wasserstoffatom oder eine $C_1$- bis $C_{12}$-Alkyl- oder $C_5$- bis $C_8$-Cycloalkylgruppen darstellt, die gegebenenfalls $OR^3$-, $NHR^3$-, $SR^3$-Gruppen tragen können, wobei $R^3$ ein Wasserstoffatom oder eine $C_1$- bis $C_{12}$-Alkyl- oder $C_5$- bis $C_8$-Cycloalkylgruppe sein kann. Bevorzugt sind die im Unteranspruch 2 aufgeführten Amine.

Unter hochmolekularen Polyphenylenethern werden die durch oxidative Kupplung von Alkylphenolen zu einer Kette alkylsubstituierter, in para--Stellung durch Sauerstoffatome etherartig gebundene Benzolringe verstanden. Die Polymeren weisen Molekulargewichte von 15000 bis 90000, bevorzugt 20000 bis 80000, bestimmt nach der in "Macromolecular Synthesis" 1, (1978), Seite 83 beschriebene Methode, auf. Hochmolekulare Polyphenylenther, auch Poly(phenylenoxide) genannt, sind an sich aus der

Literatur seit längerem bekannt (vgl. z.B. US-PS 3 661 848; US-PS 3 129 625 oder US-PS 3 378 505), so daß sich hier eine weitere Beschreibung erübrigt.

Die zur Herstellung der hochmolekularen Polyphenylenether verwendeten einwertigen Phenole, die in den beiden ortho-Stellung und ggf. in meta-Stellung , nicht aber in der para-Stellung Alkylsubstituenten aufweisen, sind übliche Phenole wie 2,6-Dimethylphenol, 2,6-Diethylphenol, 2-Methyl-6-ethylphenol, 2-Methyl-6-propylphenol, 2,6-Dibutylphenol, 2,3,6-Trimethylphenol sowie Gemische dieser Phenole. Bevorzugt wird das 2,6-Dimethylphenol, das nach den in Houben-Weyl-Müller; Methoden der organischen Chemie, Phenole, Teil 2, Bd. 6/1X, Georg Thieme Verlag, Stuttgart, 1976, Seite 1187ff und d. zit. lit. beschriebenen Methoden von den bei der Polymerisation störenden Phenolen, wie Phenol, o-Kresol, m-Kresol und den höherkernigen Phenolen, wie 2,6-Dimethyl-1-hydroxydiphenyl, abgetrennt wird.

Zur Ausführung der Polykondensation wird üblicherweise Sauerstoff in die 10 bis 50, vorzugsweise 15 bis 40°C warme Lösung des Monomeren in Gegenwart eines Katalysatorkomplexes eingeleitet. Es kann aber auch Luft verwendet werden. Die Sauerstoffdurchflußgeschwindigkeit ist im wesentlichen die gleiche, wie sie in den US-PS 3 306 874 und US-PS 3 306 875 beschrieben ist.

Bei dem für die Polykondensation verwendeten Katalysatorsystem handelt es sich somit um eine Kombination aus einem erfindungsgemäßen Amin der allgemeinen Formel (I) mit einem Kupfersalz, wie Kupfer-(I)-Bromid, Kupfer--(I)-Chlorid, Kupfer-(I)-Iodid, Kupfer-(II)-Bromid, Kupfer-(II)-Chlorid, Kupfer-(II)-Acetat und andere. Dabei werden die Amine in Mengen von 200 bis 10000 Mol.-%, bezogen auf das eingesetzte Kupfersalz, vorzugsweise in Mengen von 800 bis 2000 Mol.-%, und in Mengen von 0,5 bis 50 Mol.-%, bezogen auf das eingesetzte Phenol, vorzugsweise in Mengen von 2 bis 20 Mol.-% eingesetzt. Die Konzentration des Kupfersalzes beträgt im allgemeinen 0,2 bis 2,5 Mol pro 100 Mol Monomeres

Der Anteil des Lösungsmittels liegt üblicherweise im Bereich von 1 : 1 bis 20 : 1, d.h. maximal bis zu einem Überschuß des 20-fachen am Lösungsmittel, bezogen auf das Monomere Nach anmeldungsgemäßem Verfahren soll als Lösungsmittel ein aromatischer $C_6$- bis $C_{10}$-Kohlenwasserstoff verwendet werden Geeignete Kohlenwasserstoff sind insbesondere Toluol, Ethylbenzol, Xylol, Diethylbenzol oder deren Gemische, wobei vorzugsweise Toluol oder Ethylbenzol verwendet wird Die Lösungsmittel werden bevorzugt im Bereich von 1 : 1 bis 10 : 1 Gewichtsteilen, bezogen auf das monomere Phenol, eingesetzt. Zur Erhöhung der Katalysatorlöslichkeit können zudem geringe Mengen eines Alkanols, wie Methanol, Ethanol oder iso--Propanol zugegen sein. Darüber hinaus kann die Reaktionsmischung einen Aktivator wie ein Diarylguanidin oder ein Diarylformamidin enthalten (vgl. US-PS 3 544 515).

Beispiele für die erfindungsgemäß einzusetzenden Amine der allgemeinen Formel (I) sind Amine mit $R^1$ = einer verzweigten oder unverzweigten Alkyliden- oder Alkenylidenkette mit 2 bis 20, bevorzugt 2 bis 9 C-Atomen und der Substituent $R^2$ = einem Wasserstoffatom oder eine $C_1$- bis $C_{12}$-, bevorzugt $C_1$- bis $C_4$-, Alkyl- oder $C_5$- bis $C_8$-Cycloalkylgruppe, wobei der Rest $R^2$, $OR^3$-, $NHR^3$- oder $SR^3$-Gruppen tragen kann, wobei $R^3$ = ein Wasserstoffatom oder einer $C_1$- bis $C_{12}$-Alkyl- oder $C_5$- bis $C_8$-Cycloalkylgruppe. Beispiele für erfindungsgemäße Amine sind, ohne eine Einschränkung damit zu treffen, 3-Phenylpropylamin, 4-Phenylbutylamin, 5-Phenylpentylamin, 6-Phenylhexylamin, 1-Methyl-3-phenylpropylamin, 2-Methyl-3-phenylpropylamin, 3-Methyl-3-phenylpropylamin, 1-Ethyl-3-methyl-3-phenylpropylamin, N-Methyl-N-(1-ethyl-3-phenylpropyl)amin, N-(2-Methyl-3-phenylpropyl)-N--(3-tert -butyloxypropyl)amin, N-(2-Methyl-3-phenyl-propyl)-N-(3,5,5-trimethylmethylhexyl)amin, 3-Isopropyl-7-methyl-9-phenyloctylamin, N-(2,3,4--Trimethyl-4-propyl-N-(6-methyl-5-thiaheptyl)amin, N-[1-(3,3-dimethylcyclohexyl)propyl]-N-(3,7,11-trimethyl-12 -phenyl)amin.

Besonders bevorzugt eingesetzt werden 2-Methyl-3-phenylpropylamin, 1-Ethyl-3-methyl-3-phenylpropylamin, N-Methyl-N-(1-ethyl-3-phenylpropyl)-amin, N-(2-Methyl-3-phenylpropyl)-N-(3-tert.-butyloxypropyl)amin und N-(2-Methyl-3-phenylpropyl)-N-(3,3,3-trimethylhexyl)amin.

Die mit der Erfindung erzielten Vorteile bestehen insbesondere darin, daß man ein Polymerisat mit hoher Intrinsic-Viskosität in kurzer Zeit erhält. Bei dieser Polymerisationstechnik wird außerdem das Polymere in Ausbeuten von größer als 99 Gew.-%, bezogen auf das eingesetzte Monomer, erhalten. Das bedeutet, der Anteil an Diphenochinon ist niedrig und liegt zumindest unter 1 Gew.-%. Durch den Einsatz der erfindungsgemäßen Amine werden Polyphenylenether, welche eine deutlich geringere Eigenfarbe, als die nach anderen Methoden synthetisierten besitzen, hergestellt. Desweiteren ist von Vorteil, daß es infolge des angewendeten Polymerisationsverfahrens (Gaseinleitung, starkes Rühren) nicht zu einem starken Aufschäumen der Reaktionslösung und damit zu nicht tolerierbaren Verfahrensschwierigkeiten kommt. Häufig kommt es bei der Polymerisation zu einem Abscheiden von Kupfer enthaltenden Niederschlägen. Durch dies wird die Polyphenylenetherausbeute deutlich verringert und die Ausbeute an Diphenochinon erhöht. Ferner sinkt die Intrinsic-Viskosität ab. Auch dies wird in überraschender Weise durch den Einsatz der erfindungsgemäßen Amine verhindert.

In den Beispielen werden die eingesetzten Mengen in Moleinheiten angegeben, Prozentangaben beziehen sich stets auf 1 Mol Phenol, entsprechend 100 %, sofern nichts anderes angegeben wird. Die Tetramethyldiphenochinon-Anteile wurden direkt nach der Polymerisation vor der Zugabe des Stabilisators in mit Chloroform verdünnten Lösungen mittels Hochdruckflüssigkeitschromatographie (HPLC) bestimmt. Unter DMP wird das 2,6-Dimethylphenol, PPE Polyphenylenoxid und unter $Na_2$'EDTA das Dinatriumsalz der Ethylendiamintetraessigsäure verstanden.

Beispiele 1 bis 5

In einem 1 l-Glaskolben mit Rückflußkühler, Blattrührer und Sauerstoffeinleitungsrohr, das bis auf den Boden des Glaskolbens geführt ist, werden 450 g Toluol vorgelegt. Dazu gibt man eine Katalysatormischung aus 0,72 g Cu(I)Br (0,005 mol), 0,01 mol des jeweiligen Amins und 10 ml Toluol, die in einem Erlenmeyerkolben bei 50°C unter starkem Rühren innerhalb von 5 Minuten homogenisiert worden war. Die toluolische Katalysatorlösung wird bei 350 Upm Rührergeschwindigkeit mit 50 l/h Sauerstoff begast und 116 g einer 50 gew.-%igen DMP-Lösung in Toluol (DMP-Reinheit: 99,9 %) innerhalb einer halben Stunde kontinuierlich zudosiert. Anschließend wird 0,5 h mit 50 l/h Sauerstoff weiterbegast. Die Reaktionstemperatur wird über die gesamte Zeit bei 26 bis 28°C gehalten. Danach wird die Reaktion durch Zugabe von 20 g einer 10 gew -%igen wäßrigen $Na_2$EDTA-Lösung bei Raumtemperatur abgestoppt. Der DPQ-Gehalt der Reaktionslösung wird mittels Hochdruckflüssigkeitschromatographi (HPLC) bestimmt und ist in der Tab. 1 mit aufgeführt. Nach dem Abtrennen der wäßrigen Phase wird das PPE durch Zugabe der dreifachen Menge Methanol ausgefällt, gewaschen und bei 60°C im Vakuum getrocknet. Die Intrinsic-Viskosität wird bei 25°C in 0,5 gew-%igen Lösungen in Chloroform bestimmt, sie ist ebenfalls in der Tab. 1 aufgeführt.

Vergleichsbeispiele

Es wurde wie bei den erfindungsgemäßen Beispielen gearbeitet, jedoch wurden statt der erfindungsgemäß einzusetzenden Amine solche Amine, wie sie dem Stand der Technik aus (1) - (6) entsprechen, verwendet. Die Aufarbeitung erfolgte ebenfalls analog den erfindungsgemäßen Beispielen.

Tabelle 1

Beispiele und Vergleichsbeispiele

| Beispiel | Amine | Polyphenylenether Ausbeute (Gew.-%) | Polyphenylenether Intrinsic-Viskosität (dl/g) | Diphenochonon Ausbeute (Gew.-%) | Bemerkungen zur zur Polymerisation |
|---|---|---|---|---|---|
| 1 | 2-Methyl-3-phenyl propylamin | 99,0 | 0,68 | 0,7 | keine |
| 2 | 1-Ethyl-3-methyl-3-phenylpropyl-amin | 99,1 | 0,62 | 0,7 | keine |
| 3 | N-Methyl-N-(1-ethyl-3-phenylpropyl)-amin | 99,3 | 0,72 | 0,5 | keine |
| 4 | N-(2-Methyl-3-phenyl propyl)-N-(3-tert. butyloxypropyl)amin | 99,3 | 0,84 | 0,5 | keine |
| 5 | N-(2-Methyl-3-phenyl-propyl)-N-(3,5,5-tri-methylhexyl)amin | 99,4 | 0,79 | 0,4 | keine |

Vergleichsbeispiele
(nicht erfindungsgemäß)

| | | | | | |
|---|---|---|---|---|---|
| A | Di-n-butylamin | 96,3 | 0,48 | 2,1 | Kupfersalzab-abscheidungen |
| B | N,N'-Di-tert.-butyl-ethyldiamin | 98,4 | 0,85 | 1,4 | keine |
| C | N,N-Di-tert.-butyl-ethylendiamin (15 %)<br>Di-n-butylamin (30 %)<br>Dimethylbutylamin (55 %) | 98,1 | 0,56 | 1,9 | Kupfersalzab-scheidungen |
| D | n-Dodecylamin | 97,8 | 0,61 | 1,9 | starkes Schäumen |
| E | N,N-Dimethylbenzylamin | 20,2 | 0,1 | 40,4 | keine |

1) bezogen auf eingesetztes DMP, gemessen nach Fällung

2) bezogen auf eingesetztes DMP, gemessen mittels HPLC aus der Lösung

Patentansprüche

1. Verfahren zur Herstellung hochmolekularer Polyphenylenether aus einwertigen Phenolen, die in den beiden ortho-Stellungen oder zusätzlich in einer meta-Position, nicht aber in der para-Stellung Alkylsubstituenten aufweisen, durch oxidative Kupplungsreaktion mit Sauerstoff bei Temperaturen zwischen 10 und 50°C, in Anwesenheit eines Katalysatorkomplexes aus einem Kupfersalz und einen organischen Amin in Gegenwart eines aromatischen $C_6$- bis $C_{10}$-Kohlenwasserstoffs als Lösungsmittel im Bereich von 1 : 1 bis 20 : 1 Gewichtsteilen, bezogen auf das monomere Phenol, und gegebenenfalls eines Aktivators, dadurch gekennzeichnet, daß als Aminkomponente im Katalysatorkomplex Amine der allgemeinen Formel (I):

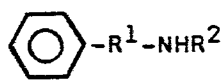 (I)

eingesetzt werden, wobei $R^1$ eine verzweigte oder nichtverzweigte Alkyliden- oder Alkenylidenkette mit 2 bis 20 C-Atomen darstellt, der Substituent $R^2$ ein Wasserstoffatom oder eine $C_1$- bis $C_{12}$-Alkyl- oder $C_5$- bis $C_8$-Cycloalkylgruppe, die gegebenenfalls funktionelle Gruppen wie $OR^3$, $NHR^3$, $SR^3$ tragen können, in denen $R^3$ wiederum ein Wasserstoffatom oder eine $C_1$- bis $C_{12}$-Alkyl- oder $C_5$- bis $C_8$-Cycloalkylgruppen sein kann, umfaßt.

2. Verfahren nach Anspruch 1, dadurch gekennzeichnet, daß als Amine 2-Methyl-3-phenyl-propylamin, N-Methyl-N-(1-ethyl-3-phenylpropyl)--amin, 1-Ethyl-3-methyl-3-phenylpropylamin, N-(2-Methyl-3-phenyl-propyl)-N-(3-tert.-butyloxypropyl)amin oder N-2-(Methyl-3-phenyl-propyl)-N-(3,5,5-trimethylhexyl)amin eingesetzt werden.

3. Verwendung der nach Anspruch 1 und 2 hergestellten Polyphenylenether zur thermoplastischen Verarbeitung zu Formteilen.

Europäisches Patentamt

**EUROPÄISCHER RECHERCHENBERICHT**

0158918
Nummer der Anmeldung

EP 85 10 3940

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | US-A-4 067 851 (T.TOMITA u.a.) * Ansprüche; Spalte 3, Zeilen 26-27; Beispiel 19 * | 1,3 | C 08 G 65/44 |
| | ----- | | |

| RECHERCHIERTE SACHGEBIETE (Int. Cl.4) |
|---|
| C 08 G |

Der vorliegende Recherchenbericht wurde für alle Patentansprüche erstellt.

| Recherchenort | Abschlußdatum der Recherche | Prüfer |
|---|---|---|
| DEN HAAG | 04-07-1985 | DERAEDT G. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82